# EUROPEAN PATENT SPECIFICATION

(11) **EP 3 237 806 B1**
(45) Date of publication and mention of the grant of the patent: **16.04.2025**
(21) Application number: 15817508.3
(22) Date of filing: 07.12.2015
(51) Int. Cl.: F24D 19/10, F16L 55/105, F24D 3/10, F24D 19/08, E03C 1/10

(54) **A FILLING DEVICE FOR A PRESSURISED HEATING CIRCUIT**
BEFÜLLUNGSANRICHTUNG FÜR EINE DRUCKHEIZKREISLAUF
DISPOSITIF DE REMPLISSAGE POUR UN CIRCUIT DE CHAUFFAGE PRÉSSURISÉ

(30) Priority: 08.12.2014 GB 201421737
(43) Date of publication of application: 01.11.2017
(73) Proprietor: Jepp, Christopher, Bexlyheath, Kent DA7 5DA (GB)
(72) Inventor: Jepp, Christopher, Bexlyheath, Kent DA7 5DA (GB)
(74) Representative: Kemp, Paul Geoffrey
(86) International application number: PCT/GB2015/053739
(87) International publication number: WO 2016/092279

(56) References cited:
- WO-A1-96/06308
- WO-A1-97/45680

## Description

### Technical Field

The present invention relates to a filling loop device for pressurised sealed central heating systems.

### Background

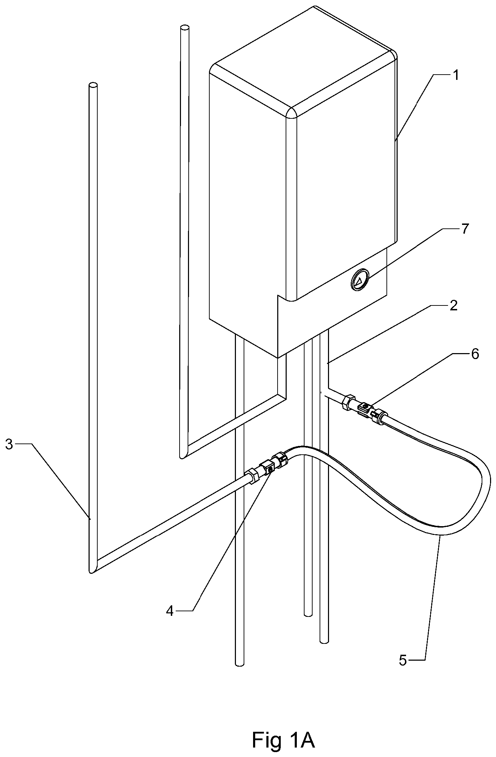

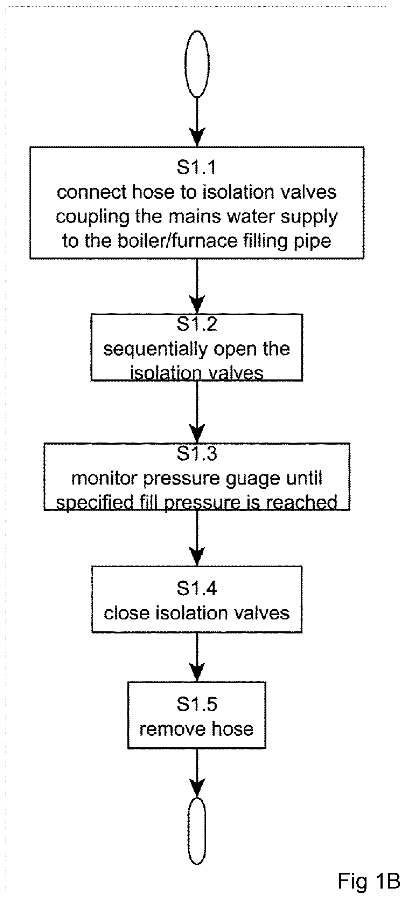

As illustrated in prior art figures 1A and 1B a conventional pressurised heating systems includes a boiler or furnace 1 in line with heating circuit pipe 2. The boiler needs to be filled from a pressurised water source such as a mains water supply pipe 3. To do this the mains water supply pipe 3 may be provided with an inlet valve 4 attached by a compression fitting. The inlet valve may be a stop or isolation valve. One inlet end of a plain hose 5 is connected by means of a BSP threaded coupling to the inlet valve 4. The heating circuit pipe 2 is provided with a spur on to which an outlet valve 6 is mounted by a compression coupling. The outlet valve is preferably a stop or isolation valve. The outlet end of the hose 5 is then connected to the outlet valve 6 by a threaded coupling (step S1 in figure 1B).

To charge the heating circuit the valves 4 and 6 are then opened (step S1.2) and water is allowed to flow into the heating circuit until a pressure gauge 7 indicates a specified circuit pressure is reached (S1.3). A check valve may be provided, preferably in one or more of the isolation valves, to prevent leakage of water back out of the pressurised circuit.

When the circuit is charged according to the system specifications the valves 4 and 6 should be closed (S1.4) and the hose 5 removed (S1.5) to ensure that there is no connection between the heating circuit 2 and mains supply pipe 3. The filling hose 5 should be left in close proximity to the boiler 1 to provide for subsequent system charging.

It is a frequent occurrence that boilers are damaged by an inexperienced or careless user leaving the filling device (filling loop) in place and the valves 4, 6 open, so over pressurising the system or allowing mains water to circulate within the heating circuit. Water in the heating circuit in accordance with good practice should be treated with anti-oxidising and anti-scaling agents. If the filling device is left in place untreated water circulates in the heating system accelerating corrosion and causing rapid and severe scaling with consequent premature failure of the boiler. Experience shows that the boiler failures can be sufficiently severe to require total replacement of the boiler.

The applicant perceives a demand for a filling device which may be able to:
- reduce system installation and charging time by obviating the need to fit and remove the hose, and in many practical cases to replace or find the hose which is often lost.
- ensure that the mains water supply will be isolated from the heating circuit after charging however inexperienced or careless the operator is.
- ensure that the specified charging pressure is delivered on every charge.

reliably and safely be operated by an unqualified operative such as the end user.

### Prior Art

The prior art devices to prevent this situation are complex devices which admit water into the heating circuit on a periodic basis to maintain the pressure.

GB2450086 discloses an apparatus for controlling the pressure of a heating fluid within a central heating system or for controlling the flow of heating fluid into a central heating system. The apparatus comprises an inlet, for connection to a supply of heating fluid, and an outlet, for connection to a heating system. A pressure sensor is arranged to sense the heating fluid pressure within the central heating system. A flow sensor is arranged to sense the volume of heating fluid flowing between the inlet and the outlet. A flow control valve controls the flow of heating fluid from the inlet to the outlet. The flow control valve is operatively connected to the pressure sensor and is arranged to open when the sensed pressure falls below a first predetermined pressure and close when the sensed pressure rises above a second predetermined pressure. Alternatively, the flow control valve is operatively connected to the flow sensor and is arranged to close once a predetermined volume of heating fluid has flowed. A self-bleeding radiator valve comprising a filter arranged to inhibit particulate matter from interfering with the operation of the valve is disclosed. A filtration device for a central heating system, preferably comprising a magnetic particle filter, is also disclosed.

This prior art device of GB2450086 provides a complex solution to the problem, comprising a pressure and/or flow sensor to control filling of the heating system by electronic means. As such it is over-complicated and costly for standard domestic use.

US20060124078 discloses a water feed controller which can provide for the addition of a preset fixed amount of water to be added after a low water condition is removed. This system provides for a preset fixed amount of water to be added to a boiler above the amount which triggers the low water condition. This generally inhibits excess cycling from the boiler operating at its minimum safe water level as well as inhibiting overfilling of the boiler. Further, there is discussed a water feed controller which can measure the amount of water added over a prior predetermined period (such as 30 days) which serves as a floating window of time so that a leak or other condition resulting in overly frequent filling can be detected quickly.

US20060124078 discloses: A water feed controller for a boiler, the controller comprising: electronics for monitoring the signal from a low water cut-off (LWCO); electronics for opening and closing a water path; and a processor; wherein when said electronics for monitoring detect a low water signal from said LWCO, said processor initiates opening of said water path to allow water to flow into said boiler; wherein said water path remains open until said LWCO ceases signalling a low water condition; and wherein said processor allows said water path to remain open after said LWCO ceases signalling said low water condition, so a preset fixed amount of water is added into said boiler after said LWCO ceases signalling said low water condition.

Again, these are complex electronic devices, over-specified for standard domestic use and not useful or easy to retrofit to existing boiler installations.

GB2204669 discloses: A fluid source e.g. a mains water supply is connected to a fluid user system such as a combination boiler by means including a non-return valve unit, a flow regulator and pipework for connecting the valve unit and flow regulator. The non-return valve allows fluid flow to the fluid user system but prevents reverse fluid flow from the user system to the fluid source. The check valve unit may have an outlet portion permanently connected to the boiler and a conical inlet passage in which a flexible pipe may be held manually during top-up of the boiler. The unit may include two identical valve stems. This device is a standard filling loop device, without a fail-safe mechanism.

WO9606308 discloses a filling loop device for a pressurized heating system comprising: means defining a fluid passage having an inlet port connectable to a fluid supply and an outlet port connectable to a heating system fluid circuit; and a dead man valve interposed in the passage between the inlet port and the outlet port, said dead man valve biased to a normally closed condition to shut off fluid flow through the channel in either direction when unattended, and manually operable to an open condition to permit fluid to flow from the inlet port to the outlet port.

### Statement of Invention

According to the present invention there is provided a filling device for a pressurised heating system as defined in claim 1.

The fluid passage may be provided by a length of pipe, flexible hose or via a channel in a mono-block. The inlet and outlet ports may be provided by any conventional coupling including at least: threaded BSP and compression couplings.

The dead-man valve is a valve which is biased to the closed condition and manually operable by an actuator to switch to the open condition. Consequently, on releasing the actuator the valve closes. Therefore, the valve cannot be left unattended in an open condition. A preferred version of the dead-man valve has a pushbutton actuator biased by a spring to the closed condition. The button must be held in the depressed condition to enable fluid to flow through the push button valve.

A push button valve may be vulnerable to jamming open by abusive users, for example by wrapping with tape, consequently actuators such as a spring biased twist grip or other less easily jammed configurations may be preferred.

To ensure there is no backflow from the boiler circuit to the mains water, a one way or check valve is connected such that flow from the inlet to the outlet connector is allowed while the reverse flow is prevented. Single check valves may be vulnerable to reverse flow leakage to prevent which a double check valve may be provided.

A second isolation valve may be connected to the check valve.

A check valve and an isolation valve may be provided in the same housing.

In some embodiments the device comprises, connected in order along the flow pathway: a 15mm inlet compression to 8mm ball valve, an 8mm push button water valve, a 15mm to 8mm adapter, a 15mm flexible filling link comprising a metal braided hose and a 15mm double check ball valve.

In this way the device provides a means to fill a pressurised heating circuit from a pressurised water source such as a mains water supply, the device being connectable in place of a standard filling loop as known in the art. The use of the push button valve in the fluid pathway means that it is impossible to leave the filling loop in place and open, so avoiding accidental damage to the heating boiler.

It will be understood that the flexible tubing portion may have a range of lengths to suit the configuration of the boiler installation, and that the connector types are not limited to any specific size and the device may be produced with chosen connector sizes to suit the installation.

The device can also include a pressure regulator pre-set to deliver fluid to the outlet at a pressure compatible with the operation of the boiler. This facilitates use by non-technical untrained or sight disabled users who may misread the pressure gauge and charge the heating system to excessive or inadequate pressure.

### Brief Description

Embodiments of a filling loop device for charging a pressurised heating circuit according to the present invention, will now be described, by way of example only, with reference to the accompanying illustrative drawings, in which:
Figure 2A shows a SW isometric view of a first filling loop device installed in a part of a pressurised heating circuit including a boiler;
Figure 2B is an exploded plan view of the filling loop device of figure 2A;
Figure 2C is a sectional detail of a first variant of a dead-man valve used in the first filling loop device;
Figure 2D is a flow chart showing a process for using the first filling loop device;
Figure 3A is a SW isometric view of an a filling loop device constructed in accordance with the present invention installed in a part of a pressurised heating circuit including a boiler;
Figure 3B is an enlarged detail side elevation of the filling device of figure 3A;
Figure 3C is a further enlarged sectional elevation through the dead-man valve of figure 3A;
Figure 3D is a flowchart of the process of using the filling loop device of figure 3A.

### Detailed Description of Figures

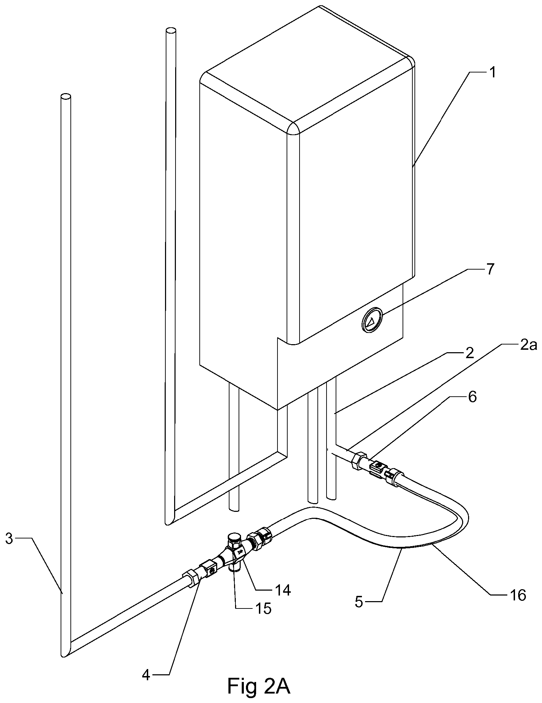

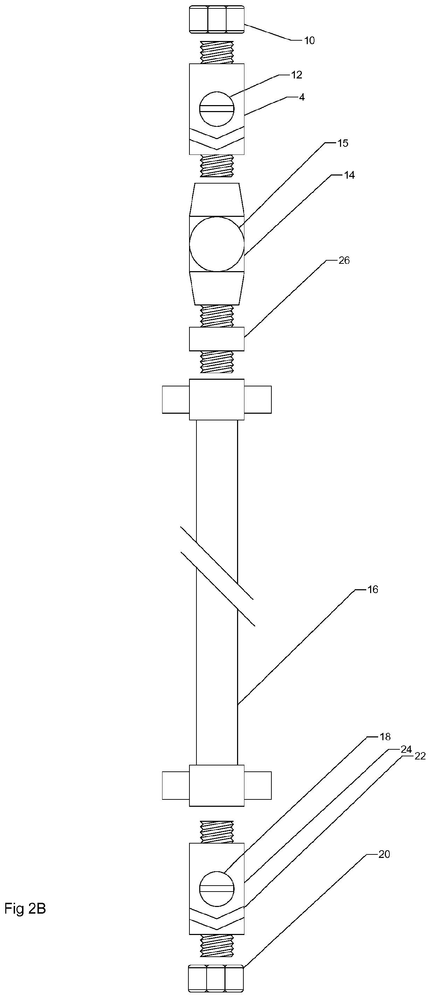

Features common to the prior art of figure 1 are referenced with the same numerals. Thus, figure 2A shows a boiler or furnace 1 plumbed into a heating circuit to circulate hot water through a pressurised heating circuit pipe 2.

An inlet valve 4 is coupled to a terminus of the mains water pipe 3 by means of an inlet connector 10. In this case the inlet connector 10 is a conventional compression coupling; however other known forms of coupling including press fit, cement or solder may be employed. The coupling 10 couples an isolation valve 12 to the end of the mains water pipe 3.

A dead man valve is provided by a push button valve 14 configured to open the fluid flow pathway when the push button 15 is pushed and thereby displaces a spool against a bias to open a passage through the valve. When the button is released the bias displaces the spool and button to close the fluid passage. In the embodiment shown the push button valve 14 has an upstream port adapted to be coupled to a downstream port of the isolation valve 12 by means of a BSP threaded coupling.

A downstream port 14d of the push button valve 14 is coupled to a flexible tubing portion (hose) 16 to provide fluid communication with the outlet valve 6. The outlet valve 6 has a housing 24 and includes an isolation valve 18 which includes a check valve 22, connected such that flow from the inlet 4 to the outlet valve is allowed while reverse flow is prevented. The outlet valve 6 is coupled to a spur off the heating circuit pipe by means of a compression coupling outlet connector 20. In some embodiments the check valve in the outlet valve 6 is a double check valve to add reliability.

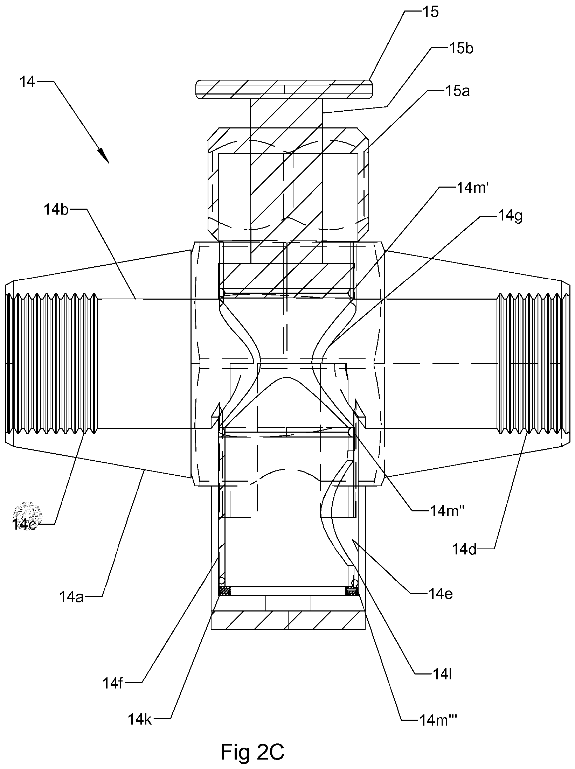

Figure 2C shows a sectional detail of the push button valve 14 with the button depressed. The push button valve 14 has a casing 14a with a fluid passage 14b communicating a female threaded inlet port 14c and outlet port 14d. The passage 14b is intersected by a spool chamber 14e containing a spool 14f. The spool 14f is in this case cylindrical. Anti-rotating means (not shown) may be provided to prevent the spool from rotating around its axis. Such means may include a tongued washer, located in nut 15a and engaging a groove in the stem 15b of the push button.

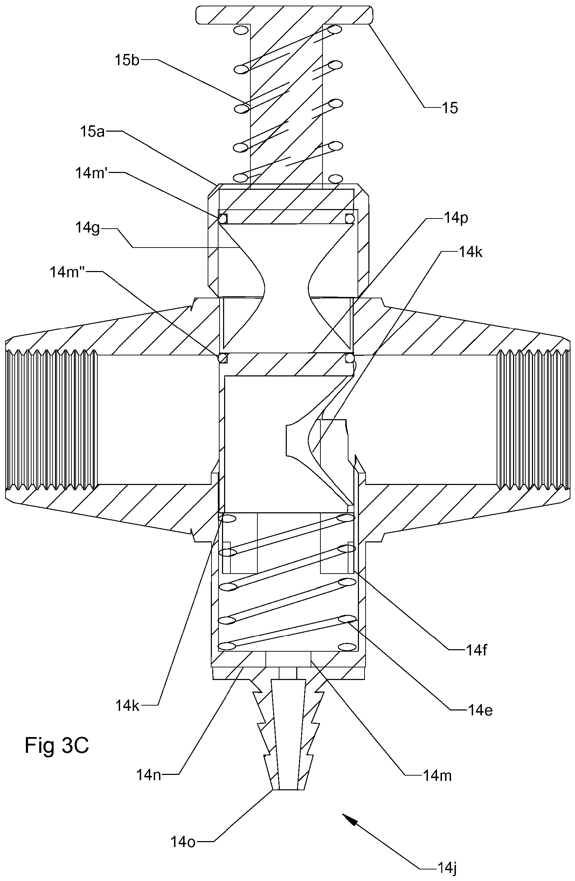

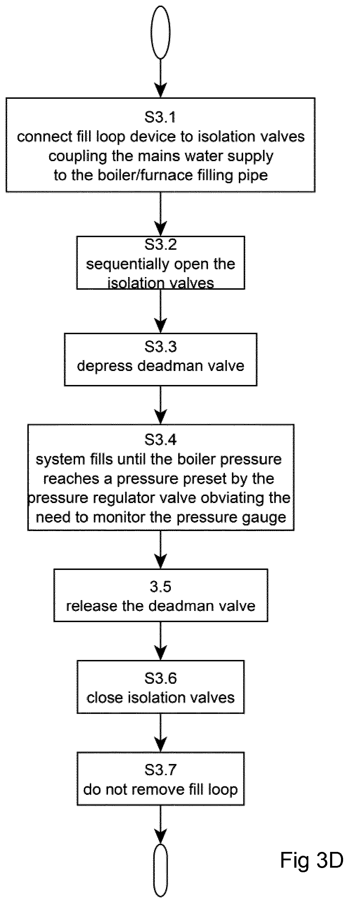

The anti-rotating means ensures that a through passage 14g extending diametrically through the spool 14f is aligned with the passage 14b to facilitate the passage of water through the valve when the pushbutton is depressed. A compression spring 14k is arranged to urge the spool 14f up into a condition where a lower part 14l of the spool obstructs the passage 14b as can be seen in Fig 3C.

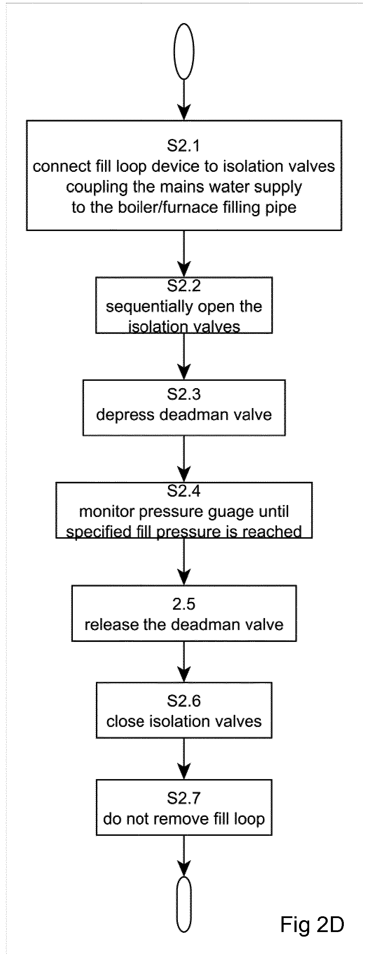

An "O" ring 14m' encircles the spool above the upper part, a middle "O" ring 14m" encircles the spool between the upper and lower part and a lower "O" ring encircles the spool at the bottom of the lower part. The "O" rings provide a fluid sealing bearing surface for the spool in the cylindrical spool chamber. Figure 2D is a flow chart showing the method of using the device of the first embodiment. The inlet valve 4 and outlet valve 6 will be installed with the heating system and will remain in place on the mains supply 3 and heating circuit spur 2a as in the conventional prior art arrangement.

In step 2.1 the fill loop device is coupled between the inlet and outlet valves 4 and 6 to provide a channel for the passage of mains water. At step 2.2 the isolation valves 12 and 18 are opened. At step 2.3 the press button of the dead-man valve is depressed thereby opening a passage for the flow of mains water from the mains pipe 3 to the heating circuit spur 2a. This pressurises the heating circuit 2 and the pressure is read at step 2.4 from the pressure gauge 7 by the user until a manufacturer specified pressure is reached. When the specified pressure is reached the press button valve is released at step 2.5. The isolation valves 12 and 18 should then be closed at step 2.6. Conveniently the filling loop may then be left in place at step S2.7 since there is no possibility of water flow through the filling loop device so long as the valves function correctly. Even if step 2.6 is overlooked there is little risk of water flow into the heating circuit and less of water flow from the heating circuit into the mains supply. In this first embodiment the device comprises, connected in order along the flow pathway: a 15mm inlet compression to 8mm ball valve 12, an 8mm push button water valve 14, a 15mm to 8mm adapter 26, a 15mm flexible filling link comprising a metal braided hose 16 and a 15mm combined double check and ball valve 24.

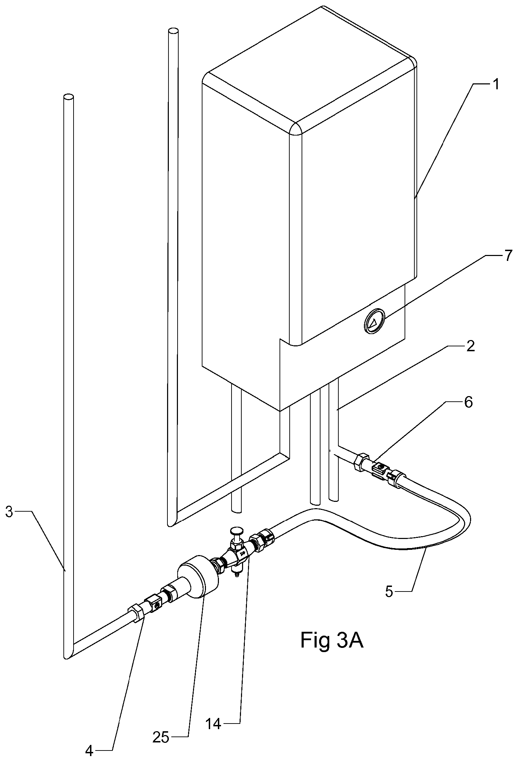

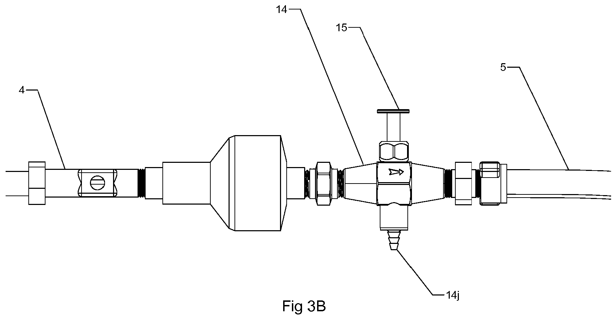

The second embodiment of the fill loop device is generally similar to the first and corresponding components are identified with similar numerals. Accordingly, only the differences will be described. As can best be seen in figures 3A and 3B the filling loop device includes a governor or pressure regulating valve 25 in series with the press button valve 14. The pressure regulating valve 25 is set to limit the maximum water supply pressure at the outlet 6 of the filling loop device to correspond to the specified maximum pressure for the boiler 1. As a result, an inexperienced or untrained user cannot over pressurise the system and thereby cause damage.

A further modification of the second embodiment is most readily apparent from figure 3C. This addresses the issue of the isolation valve 18 being incorrectly left open and permitting backflow to the press valve 14 even against the check valve 22. Against this eventuality a drain passage 14k is formed in the lower part of the spool and arranged to align with the outlet port. The drain passage 14k is isolated from the through passage by a barrier 14p, and the middle "O" ring 14m". The drain passage communicates with a lower part of the spool chamber and hence to a drain port 14j is provided in the body of the press valve 14. The drain port is conveniently formed by drilling a bore 14m through the base 14n of the spool chamber. Since the lower part of the spool chamber is then open to air this creates an air gap between the inlet port and the outlet port. A hollow nipple 14o may be formed on the spool chamber base in communication with the bore 14m to which a hose may be attached. This allows water flowing back into the press valve (from the right in figure 3C), to flow through a drain port 14k formed in a bottom portion of the spool 14f and to drain out through the drain port 14j.

Figure 3C illustrates an alternative embodiment in which the spring 14e' shown in ghosted lines, is located around the press button stem to act between the press button and the valve nut 15b.

It will be appreciated by the skilled person that while the filling loop device has been developed mainly for retrofit to existing pressurised boiler heating installation, it may be integrated into a boiler housing at manufacture, especially in the case of the second or third embodiments.

## Claims

1. A filling loop device for a pressurized heating system comprising:
means comprising a dead man valve (14) defining a fluid passage (14b) having, an inlet port (14c) connectable to a fluid supply and an outlet port (14d) connectable to a heating system fluid circuit; said dead man valve (14) biased to a normally closed condition to shut off fluid flow through the fluid passage (14b) in either direction when unattended, and manually operable to an open condition to permit fluid to flow from the inlet port to the outlet port;
said dead man valve (14) having:
a casing (14a) providing the fluid passage (14b) with the inlet port, the outlet port and, a spool chamber (14e);
a spool (14f) slidably housed in the spool chamber (14e), said spool including a through passage (14g) capable of communicating the inlet port (14c) and outlet port (14d) for fluid flow therebetween when manually operated, and
bias means (14k) to urge the spool (14f) to the closed condition so that a lower part (14l) of the spool (14f) obstructs the fluid passage (14b) to shut off fluid flow through the inlet port (14c), and
**characterised in that** a drain passage is formed in the lower part of the spool (14f) isolated from the fluid passage to communicate between the outlet port and a drain port (14j) formed in the lower part of the spool chamber (14e) when the bias means (14k) displaces the spool (14f) to the closed condition.

2. A device according to claim 1 comprising a pressure regulator valve (25) pre-set to prevent excess pressurisation of a heating system.

3. A device according to claim 1 or claim 2 wherein the bias means comprises a spring (14e) to spring bias the spool to close a fluid passage through the valve and a manual actuator operable to displace the spool in opposition to the spring force while manually attended.

4. A device according to claim 3 wherein the actuator comprises a press button (15).

5. A device according to any of claims 1 - 4 wherein the drain port (14j) is formed in a base of the spool chamber 14e.

6. A device according to any one of claims 1-5 wherein the drain port (14j) is provided with a hose coupling.

7. A device according to claim 6 wherein the hose coupling is a nipple (14o).

8. A device according to any one of the preceding claims in combination with a boiler.

9. A method of charging a pressurized boiler and heating circuit using a filling loop device according to any one of claims 1 to 8 comprising the steps of:
providing the fluid channel between a mains water supply and the pressurized heating circuit, said fluid channel including a dead-man shut off valve (14) having a manually operable actuator configured to close the channel when not manually actuated;
manually actuating the dead-man valve to allow water to flow from the mains supply to the heating circuit until the heating circuit reaches a specified operating pressure;
releasing the dead-man valve actuator to shut off the channel **characterised by** the step of the bias means (14k) urging the spool (14f) so that the lower part of the spool obstructs the fluid passage (14b) to shut off fluid flow through the inlet port (14c), and the drain passage communicates between the outlet port (14d) and the drain port (14j).

10. A method according to claim 9 comprising leaving the fluid channel in place after charging the pressurized boiler and heating circuit.

11. A method according to one of claims 9 or 10 comprising providing a one way check valve in the channel to prevent backflow from the heating circuit to the mains supply.

12. A method according to any one of claims 9 to 11 comprising providing a pressure regulation valve in the channel pre-set to regulate the maximum pressure of water deliverable to the heating circuit in order to prevent charging the heating circuit to a damaging excessive pressure.

## Patentansprüche

1. Eine Füllschleifenvorrichtung für ein unter Druck stehendes Heizsystem, umfassend:
Mittel, die ein Totmannventil (14) umfassen, das einen Flüssigkeitsdurchgang (14b) definiert, der einen mit einer Flüssigkeitsversorgung verbindbaren Einlassanschluss (14c) und einen mit einem Flüssigkeitskreislauf eines Heizsystems verbindbaren Auslassanschluss (14d) aufweist; wobei das Totmannventil (14) in einen normalerweise geschlossenen Zustand vorgespannt ist, **um** den Flüssigkeitsfluss durch den Flüssigkeitsdurchgang (14b) in beide Richtungen zu unterbrechen, wenn es unbeaufsichtigt ist, und manuell in einen offenen Zustand bedienbar ist, um den Flüssigkeitsfluss vom Einlassanschluss zum Auslassanschluss zu ermöglichen;
wobei das Totmannventil (14) aufweist:
ein Gehäuse (14a), das den Flüssigkeitsdurchgang (14b) mit dem Einlassanschluss, dem Auslassanschluss und einer Spulenkammer (14e) bereitstellt;
eine Spule (14f), die verschiebbar in der Spulenkammer (14e) untergebracht ist, wobei die Spule einen Durchgang (14g) aufweist, der in der Lage ist, den Einlassanschluss (14c) und den Auslassanschluss (14d) für einen Flüssigkeitsfluss dazwischen zu verbinden, wenn er manuell betätigt wird, und
Vorspannmittel (14k), um den Schieber (14f) in den geschlossenen Zustand zu drängen, so dass ein unterer Teil (141) des Schiebers (14f) den Flüssigkeitsdurchgang (14b) versperrt, um den Flüssigkeitsfluss durch die Einlassöffnung (14c) zu unterbrechen, und
**dadurch gekennzeichnet, dass** im unteren Teil des Schiebers (14f) ein Abflusskanal ausgebildet ist, der vom Flüssigkeitskanal isoliert ist, um eine Verbindung zwischen der Auslassöffnung und einer im unteren Teil der Schieberkammer (14e) ausgebildeten Abflussöffnung (14j) herzustellen,
wenn die Vorspanneinrichtung (14k) den Schieber (14f) in den geschlossenen Zustand verschiebt.

2. Eine Vorrichtung nach Anspruch 1, die ein Druckregelventil (25) umfasst, das so voreingestellt ist, dass es eine übermäßige Druckbeaufschlagung eines Heizsystems verhindert.

3. Eine Vorrichtung nach Anspruch 1 oder Anspruch 2, bei der die Vorspanneinrichtung eine Feder (14e) zum Federvorspannen des Schiebers zum Schließen eines Flüssigkeitsdurchgangs durch das Ventil und einen manuellen Aktuator umfasst, der den Schieber bei manueller Betätigung entgegen der Federkraft verschieben kann.

4. Vorrichtung nach Anspruch 3, wobei der Aktuator einen Druckknopf (15) umfasst.

5. Eine Vorrichtung nach einem der Ansprüche 1 bis 4, wobei die Ablassöffnung (14j) in einer Basis der Spulenkammer 14e ausgebildet ist.

6. Vorrichtung nach einem der Ansprüche 1 bis 5, wobei der Ablassanschluss (14j) mit einer Schlauchkupplung versehen ist.

7. Vorrichtung nach Anspruch 6, wobei die Schlauchkupplung ein Nippel (14o) ist.

8. Vorrichtung nach einem der vorhergehenden Ansprüche in Kombination mit einem Kessel,

9. Verfahren zum Füllen eines unter Druck stehenden Kessels und Heizkreislaufs unter Verwendung einer Füllschleifenvorrichtung nach einem der Ansprüche 1 bis 8, umfassend die Schritte:
Bereitstellen des Flüssigkeitskanals zwischen einer Hauptwasserversorgung und dem unter Druck stehenden Heizkreislauf, wobei der Flüssigkeitskanal ein Totmann-Absperrventil (14) mit einem manuell bedienbaren Aktuator umfasst, der so konfiguriert ist, dass er den Kanal schließt, wenn er nicht manuell betätigt wird;
manuelles Betätigen des Totmannventils, um den Wasserfluss von der Hauptversorgung zum Heizkreislauf zu ermöglichen, bis der Heizkreislauf einen bestimmten Betriebsdruck erreicht;
Freigabe des Totmann-Ventilantriebs zum Absperren des Kanals,
**gekennzeichnet durch** den Schritt, bei dem die Vorspanneinrichtung (14k) den Schieber (14f) so drückt, dass der untere Teil des Schiebers den Flüssigkeitsdurchgang (14b) versperrt, um den Flüssigkeitsfluss durch die Einlassöffnung (14c) abzuschalten, und der Abflussdurchgang eine Verbindung zwischen der Auslassöffnung (14d) und der Abflussöffnung (14j) herstellt.

10. Verfahren nach Anspruch 9, bei dem der Flüssigkeitskanal nach dem Aufladen des unter Druck stehenden Kessels und des Heizkreislaufs an Ort und Stelle belassen wird.

11. Verfahren nach einem der Ansprüche 9 oder 10, umfassend das Vorsehen eines Einweg-Rückschlagventils im Kanal, um einen Rückfluss vom Heizkreislauf zur Hauptversorgung zu verhindern.

12. Verfahren nach einem der Ansprüche 9 bis 11, umfassend das Bereitstellen eines Druckregelventils im Kanal, das so eingestellt ist, dass es den maximalen Wasserdruck regelt, der an den Heizkreislauf abgegeben werden kann, um zu verhindern, dass der Heizkreislauf mit einem schädlichen Überdruck belastet wird.

## Revendications

1. Dispositif de boucle de remplissage pour un système de chauffage sous pression comprenant :
moyens comprenant une soupape à homme mort (14) définissant un passage de fluide (14b) ayant un orifice d'entrée (14c) pouvant être connecté à une alimentation en fluide et un orifice de sortie (14d) pouvant être connecté à un circuit de fluide de système de chauffage ; ladite vanne homme mort (14) polarisée vers un état normalement fermé pour couper l'écoulement de fluide à travers le passage de fluide (14b) dans les deux sens lorsqu'elle n'est pas surveillée, et pouvant être actionnée manuellement vers un état ouvert pour permettre au fluide de s'écouler de l'orifice d'entrée vers l'orifice de sortie ;
ladite vanne homme mort (14) ayant :
un boîtier (14a) fournissant le passage de fluide (14b) avec l'orifice d'entrée, l'orifice de sortie et une chambre de bobine (14e);
une bobine (14f) logée de manière coulissante dans la chambre de bobine (14e), ladite bobine comprenant un passage traversant (14g) capable de faire communiquer l'orifice d'entrée (14c) et l'orifice de sortie (14d) pour un écoulement de fluide entre eux lorsqu'elle est actionnée manuellement, et des moyens de polarisation (14k) pour pousser la bobine (14f) vers l'état fermé de sorte qu'une partie inférieure (141) de la bobine (14f) obstrue le passage de fluide (14b) pour arrêter l'écoulement de fluide à travers l'orifice d'entrée (14c), et
**caractérisé en ce qu'**un passage de drainage est formé dans la partie inférieure de la bobine (14f) isolée du passage de fluide pour communiquer entre l'orifice de sortie et un orifice de drainage (14j) formé dans la partie inférieure de la chambre de bobine (14e) lorsque le moyen de polarisation (14k) déplace la bobine (14f) vers l'état fermé.

2. Dispositif selon la revendication 1 comprenant une vanne régulatrice de pression (25) préréglée pour empêcher une surpression d'un système de chauffage.

3. Dispositif selon la revendication 1 ou la revendication 2, dans lequel les moyens de sollicitation comprennent un ressort (14e) pour solliciter par ressort la bobine afin de fermer un passage de fluide à travers la vanne et un actionneur manuel pouvant être actionné pour déplacer la bobine en opposition à la force du ressort tout en étant actionné manuellement.

4. Dispositif selon la revendication 3 dans lequel l'actionneur comprend un bouton-poussoir (15).

5. Dispositif selon l'une quelconque des revendications 1 à 4, dans lequel l'orifice de drainage (14j) est formé dans une base de la chambre de bobine 14e.

6. Dispositif selon l'une quelconque des revendications 1 à 5, dans lequel l'orifice de vidange (14j) est pourvu d'un raccord de tuyau.

7. Dispositif selon la revendication 6, dans lequel le raccord de tuyau est un mamelon (14o).

8. Dispositif selon l'une quelconque des revendications précédentes en combinaison avec une chaudière.

9. Procédé de chargement d'une chaudière sous pression et d'un circuit de chauffage utilisant un dispositif de boucle de remplissage selon l'une quelconque des revendications 1 à 8 comprenant les étapes consistant à :
fournir le canal de fluide entre une alimentation en eau du réseau et le circuit de chauffage sous pression, ledit canal de fluide comprenant une vanne d'arrêt à homme mort (14) ayant un actionneur à commande manuelle configuré pour fermer le canal lorsqu'il n'est pas actionné manuellement ;
actionner manuellement la vanne homme mort pour permettre à l'eau de s'écouler du réseau d'alimentation vers le circuit de chauffage jusqu'à ce que le circuit de chauffage atteigne une pression de service spécifiée ;
relâchement de l'actionneur de soupape d'homme mort pour fermer le canal **caractérisé par** l'étape du moyen de polarisation (14k) poussant la bobine (14f) de sorte que la partie inférieure de la bobine obstrue le passage de fluide (14b) pour fermer l'écoulement de fluide à travers l'orifice d'entrée (14c), et le passage de vidange communique entre l'orifice de sortie (14d) et l'orifice de vidange (14j).

10. Procédé selon la revendication 9 comprenant le fait de laisser le canal de fluide en place après le chargement de la chaudière sous pression et du circuit de chauffage.

11. Procédé selon l'une des revendications 9 ou 10, comprenant la fourniture d'un clapet anti-retour unidirectionnel dans le canal pour empêcher le reflux du circuit de chauffage vers l'alimentation secteur.

12. Procédé selon l'une quelconque des revendications 9 à 11, comprenant la fourniture d'une vanne de régulation de pression dans le canal préréglée pour réguler la pression maximale de l'eau pouvant être délivrée au circuit de chauffage afin d'empêcher de charger le circuit de chauffage à une pression excessive dommageable.
